(19) **Europäisches Patentamt**
**European Patent Office**
**Office européen des brevets**

(11) **EP 2 212 196 B1**

(12) **FASCICULE DE BREVET EUROPEEN**

(45) Date de publication et mention
de la délivrance du brevet:
**01.05.2013   Bulletin 2013/18**

(51) Int Cl.:
***B64C 27/00*** *(2006.01)*

(21) Numéro de dépôt: **08859459.3**

(22) Date de dépôt: **25.09.2008**

(86) Numéro de dépôt international:
**PCT/FR2008/001334**

(87) Numéro de publication internationale:
**WO 2009/074745 (18.06.2009 Gazette 2009/25)**

(54) **PROCEDE ET DISPOSITIF DE DETECTION ET DE SIGNALISATION DE L'APPROCHE DU DOMAINE DE VORTEX PAR UN GIRAVION**

VERFAHREN UND VORRICHTUNG ZUR ERKENNUNG UND SIGNALISIERUNG DER ANNÄHERUNG EINES DREHFLÜGLERS AN EINEN WIRBELBEREICH

METHOD AND DEVICE FOR DETECTING AND SIGNALLING THE APPROACH OF A ROTORCRAFT TO A VORTEX DOMAIN

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.09.2007   FR 0706785**

(43) Date de publication de la demande:
**04.08.2010   Bulletin 2010/31**

(73) Titulaire: **EUROCOPTER**
**13725 Marignane Cédex (FR)**

(72) Inventeur: **CERTAIN, Bernard**
**F-13090 Aix en Provence (FR)**

(74) Mandataire: **Pouillot, Laurent Pierre Paul**
**GPI & Associés**
**1330 Rue Guillibert de la Lauzière**
**EuroParc de Pichauny, Bât B2**
**13856 Aix-en-Provence Cedex 3 (FR)**

(56) Documents cités:
**WO-A-2004/101358     US-A- 3 373 605**

• **DAVID J VARNES: "Development of a Helicopter Vortex Ring State Warning System Through a Moving Map Display Computer" THESIS, 1 septembre 1999 (1999-09-01), XP009100651**
• **WAYNE JOHNSON: "Model for Vortex Ring State Influence on Rotorcraft Flight Dynamics" NASA TECHNICAL PUBLICATION, no. 2005-213477, décembre 2005 (2005-12), XP002481739 Moffet Field California USA**

**Description**

La présente invention concerne un procédé et un dispositif de détection et de signalisation de l'approche du domaine de vortex par un giravion, notamment du type hélicoptère.

Plus particulièrement, ledit procédé et ledit dispositif de détection et de signalisation sont destinés à informer le pilote d'un giravion que ledit giravion est proche, voire aborde un domaine de vol désigné généralement par la dénomination « état de vortex » par l'homme du métier.

On rappelle qu'un giravion, quelquefois appelé « appareil à voilure tournante » (terme anglo-saxon : « Rotary Wing ») est équipé d'un rotor principal (éventuellement de plusieurs rotors principaux), d'axe sensiblement vertical et de grand diamètre qui assure totalement ou partiellement la sustentation.

Dans le cas particulier de l'hélicoptère, le rotor principal, entraîné par au moins un moteur, assure à la fois la sustentation et la propulsion. En principe, un hélicoptère comprend également un rotor auxiliaire, appelé rotor arrière (ou rotor « anti-couple ») pour le contrôle en lacet de l'appareil.

Plus précisément, le rotor principal est constitué par un certain nombre de pales qui peuvent être considérées comme des ailes de grand allongement, animées d'un mouvement de rotation.

Ces pales sont attachées à une partie centrale du rotor appelée « moyeu ».

Par suite, au moins un moteur fournit la puissance mécanique aux rotors principal et arrière, ainsi qu'à des organes annexes.

Ce moteur est en général un moteur à turbine. Etant donné que le nombre de tours à la sortie d'une turbine est de l'ordre de 30 000 tours/minute (environ 500 t/s) alors que le nombre de tours du rotor principal est de l'ordre de 300 tours/minutes, la transmission de la puissance de la turbine au rotor principal nécessite d'intercaler un réducteur appelé boîte de transmission principale (BTP).

Un arbre de sortie de la BTP entraîne de la sorte notamment le rotor principal et donc les pales par l'intermédiaire du moyeu.

Dans ces conditions, un giravion exécute en principe trois sortes de vols :

- vol vertical, ascendant ou descendant,

- vol stationnaire, l'appareil étant immobile par rapport à l'air,

- vol de translation, horizontal ou incliné.

Dans le vol vertical, la résultante aérodynamique et le poids total sont deux forces ayant la même direction mais de sens opposés : le vol est ascendant ou descendant, suivant que l'effet aérodynamique est supérieur ou inférieur au poids de l'appareil.

Le vol stationnaire correspond à l'équilibre de l'appareil immobile et soumis à deux forces égales et opposées, à savoir la résultante aérodynamique et le poids de l'appareil.

Quant au vol de translation, il correspond à une possibilité normale des appareils appelés à se déplacer dans l'air : il n'est donc pas particulier aux giravions mais diffère du vol des avions.

En pratique, l'invention se rapporte au vol de descente d'un giravion.

Dans ce cas, l'écoulement de l'air généré par le rotor principal diffère selon que la descente est rapide, modérée ou lente.

Les vols à descentes rapide et modérée sont des régimes « non motorisés » : la puissance est fournie par le flux d'air et une roue libre intercalée dans l'ensemble de transmission de puissance mécanique permet au rotor de tourner librement.

A contrario, le vol à descente lente est un régime motorisé, le pilote provoquant et contrôlant la descente du giravion par réduction du pas collectif des pales du rotor principal.

En fait, l'invention concerne plus spécifiquement le vol à descente lente d'un giravion, cette descente pouvant se faire de façon verticale ou encore selon une forte pente de la trajectoire, c'est-à-dire avec une certaine vitesse horizontale ou vitesse propre instantanée $V_P$ d'avancement du giravion, cette vitesse propre instantanée restant dans un domaine de valeurs relativement basses et étant associée à une vitesse verticale instantanée v.

Dans le vol à descente lente et comme illustré par ailleurs, un sillage se forme à la partie inférieure du rotor principal, ce qui oblige les filets d'air centraux inférieurs à se rabattre vers le bas et les filets d'air centraux supérieurs à créer une zone tourbillonnaire vers la périphérie des pales. L'écoulement aérodynamique est donc perturbé et les tourbillons périphériques risquent ainsi de se développer en isolant complètement le plan du rotor. Ce phénomène dangereux, désigné « état de vortex » entraîne une perte générale de sustentation et de maniabilité.

En d'autres termes et quand un giravion amorce une descente à faible vitesse verticale, le flux d'air traversant normalement le rotor du bas vers le haut en vol de translation risque d'être inversé et empêche de traverser le rotor, soit vers le haut, soit vers le bas : les pales travaillent alors dans leur propre remous et l'air environnant forme un « anneau tourbillonnaire » au voisinage du rotor principal.

Une interprétation physique du phénomène est que le rotor, en descendant de la sorte, « avale » son propre sillage, ce qui explique le caractère turbulent de l'écoulement observé dans ce cas.

Par conséquent, ce mode de fonctionnement se caractérise par un décollement de l'air au-dessus du rotor, provoquant un sillage.

L'anneau tourbillonnaire se développe en général pour une vitesse verticale de l'hélicoptère voisine de la vitesse induite par le rotor, c'est-à-dire de l'ordre de 10m/s, et avec une faible vitesse de translation : une partie importante du rotor se trouve alors dans une zone de décrochage, les divers éléments de pales travaillant alors à un angle d'incidence relativement élevé. En translation à vitesse modérée et élevée, le remous du rotor est rejeté vers l'arrière, de sorte que l'état de vortex ne se produit pas.

Le régime vortex est dangereux, mais par contre peut être facilement abandonné par le pilote, en amorçant soit une translation (commande de pas cyclique des pales du rotor), soit en augmentant la vitesse verticale (diminution du pas général des pales du rotor) afin de faire disparaître les remous du rotor.

Par exemple, on connaît par le document US 6880782 un dispositif visant à agir sur le rotor d'un giravion pour sortir d'un domaine de vortex. Néanmoins, ce type de dispositif ne permet pas d'éviter à un giravion d'entrer dans ce domaine de vortex. Il se contente de corriger une situation potentiellement dangereuse mais n'évite pas la survenance d'une telle situation.

Par ailleurs, le document "Development of a Helicopter Vortex Ring State Warning System Through a Moving Map Display Computer" de David Varnes est relatif à l'approche du domaine de vortex d'un giravion.

La présente invention a pour objet de proposer un procédé et un dispositif permettant de détecter et de signaler à un pilote l'entrée d'un giravion dans un état de vortex ou encore, de façon prédictive, l'approche du giravion dans ledit état de vortex pour remédier aux inconvénients précités inhérents à de telles situations de vol.

A cet effet, ledit procédé est remarquable selon l'invention en ce que selon la revendication 1,

a) on fait une série de mesures préalables sur un giravion de référence du type particulier de giravion en mesurant lors de vols préliminaires une pluralité de couples de valeurs relatives aux composantes tangentielle et normale de la vitesse de l'écoulement d'air par rapport au plan du rotor, ces couples de valeurs déterminant au moins un domaine de vortex instantané représentatif de l'état de vortex par au moins un diagramme où les abscisses et les ordonnées correspondent respectivement auxdites composantes tangentielle et normale,

b) lors du vol d'un giravion dudit type particulier de giravion, on détermine en temps réel une vitesse propre prédictive $V_{PP}$ dudit giravion et une vitesse verticale prédictive $v_{AP}$ associée, à savoir des évaluations des vitesses propre et verticale que le giravion va atteindre à l'issue d'un temps donné.

c) on définit une première condition de détection relative aux dites vitesses propre prédictive $V_{PP}$ et verticale prédictive $v_{AP}$ associées qui sont incluses dans le domaine de vortex instantané,

d) on déclenche une alarme de signalisation lorsque ladite première condition de détection est réalisée.

Avant de présenter le processus d'obtention des vitesses propre prédictive $V_{PP}$ et verticale prédictive $v_{AP}$, il importe de bien considérer qu'un domaine de vortex est lié au plan du rotor du giravion alors que la vitesse verticale est mesurée sur une verticale, c'est-à-dire suivant une ligne d'action de la pesanteur, et que la vitesse propre est mesurée selon la direction de la trajectoire, à savoir égale à la vitesse vraie s'il s'agit d'un vol en palier (vol dans un plan horizontal).

A ce propos, on doit retenir que la vitesse verticale d'un aéronef et par suite celle d'un giravion est mesurée par un variomètre. La vitesse vraie est, quant à elle, déduite de la mesure d'un anémomètre qui indique une vitesse corrigée, encore dite vitesse air et désignée ci-après par VC.

Alors, il est admis que :

$$VC = V_P \sqrt{\sigma}$$

où le terme $\sigma$ (densité relative de l'air) est égal au quotient de la masse volumique p de l'air à l'altitude considérée par la masse volumique $\rho_0$ de l'air au sol en atmosphère standard.

Par ailleurs et pour bien comprendre l'invention, il convient encore de rappeler que le vol de translation d'un giravion se fait à une vitesse d'avancement d'autant plus élevée que les déplacements du manche cyclique (commande du pas cyclique des pales) vers l'avant (du giravion) est important : il en résulte une variation cyclique longitudinale du pas des pales qui entraîne l'inclinaison du plan du rotor vers l'avant et l'assiette du giravion suit sensiblement l'inclinaison du rotor.

Ces préambules ayant été établis, on comprend bien que pour de faibles angles du plan du rotor par rapport à un plan horizontal, c'est-à-dire pour les phases de vol à faible accélération horizontale, on peut légitimement confondre les systèmes d'axes relatifs respectivement au domaine du vortex instantané d'une part (axes rotor) et aux vitesses horizontale et verticale d'autre part. Il en est bien ainsi et cela correspond à ce qui est réalisé généralement quand on parle de mise en « vortex en descente quasi-verticale ». L'homme du métier qualifie un tel domaine de vortex de « statique », ce qui suppose une assiette du plan du rotor et une assiette du giravion sensiblement nulles.

Si ce cas est bien réel, ce n'est pas pour autant le cas le plus courant, car ne correspondant pas à une utilisation classique d'un giravion.

En conséquence, l'homme du métier définit en parallèle un domaine de vortex « dynamique ». La mise en vortex dynamique, c'est-à-dire en présence d'une forte accélération horizontale négative, avec 20° (voire davantage) de l'assiette du plan du rotor (et par suite 20°, voire davantage de décalage entre les deux systèmes d'axes définis ci-dessus) est tout aussi dangereuse et peut se produire lors de tout atterrissage avec une vitesse verticale de descente, une forte décélération horizontale, cette situation étant éventuellement aggravée par un léger vent arrière.

De la sorte, un domaine de vortex instantané de type statique sera défini essentiellement par un seul domaine représenté dans le système d'axes lié au plan du rotor dont l'assiette est sensiblement nulle alors qu'un domaine de vortex instantané de type dynamique peut comprendre une pluralité de domaines de vortex liés au plan du rotor, chaque domaine de vortex correspondant à une assiette donnée et étant représenté par un diagramme dans le système d'axes lié au plan du rotor (abscisses et ordonnées relatives respectivement aux composantes tangentielle et normale de la vitesse de l'air par rapport au plan du rotor). Bien entendu, pour une assiette donnée du plan du rotor pour laquelle le domaine de vortex n'a pu être établi, une interpolation sera effectuée par rapport à deux assiettes immédiatement adjacentes, si possible de part et d'autre, sinon une extrapolation sera réalisée.

L'invention concerne l'exploitation d'un domaine de vortex instantané de type dynamique.

De façon avantageuse, on obtient la vitesse verticale prédictive $v_{AP}$ au cours de l'étape b) en effectuant les étapes complémentaires suivantes :

b1) on mesure la vitesse verticale instantanée v du giravion,

b2) on détermine une vitesse verticale corrective $v_{CORR}$, dépendant d'un terme prédicitf,

b3) on additionne la vitesse verticale corrective à la vitesse verticale instantanée pour obtenir ladite vitesse verticale prédictive $v_{AP}$.

Comme vu précédemment, la vitesse verticale instantanée v du giravion est fournie par un variomètre.

De plus, au cours de l'étape b2), durant une étape b21), on détermine une première correction de la mesure de la vitesse verticale instantanée v en fonction de la vitesse propre instantanée $V_P$, la vitesse propre prédictive $V_{PP}$, la vitesse $V_Y$ de puissance minimale, la vitesse verticale instantanée v mesurée par un variomètre et une constante caractéristique k du giravion d'un type donné de giravion.

Cette constante caractéristique k est déterminée grâce à des essais et à partir d'une approximation linéaire qui correspond à un rapport de proportionnalité entre puissances et vitesse verticale du giravion, indépendant de la masse du giravion, tel que :

$$v = k\left(\frac{W}{W_n} - 1\right)$$

avec l'approximation :

$$\frac{W_n}{Wv_Y} = 2 - \frac{V_P}{V_Y}$$

Dans ces relations, on désigne par $Wv_Y$ et $W_n$ les puissances nécessaires pour voler en palier respectivement à la vitesse $V_Y$ de puissance minimale et à la vitesse propre $V_P$, et par W la puissance disponible instantanée du giravion.

Sur cette base et en premier lieu, on détermine un terme prédictif applicable à la vitesse verticale instantanée v et valant :

$$C_{P1} = (v + k)\frac{V_{PP} - V_P}{2V_Y - V_{PP}}$$

Dans le cadre de cette première correction, il est prévu éventuellement en deuxième lieu durant une étape b21') de pondérer le terme prédictif par un premier coefficient pondérateur A déterminé par des essais relatifs à chaque type de giravion. Ce premier coefficient pondérateur est généralement proche de l'unité.
Le terme prédictif pondéré $C_{PP1}$ s'écrit donc :

$$C_{PP1} = A \times C_{P1}$$

Le signe « x » correspond au symbole de multiplication.
En effet, il est théoriquement inutile d'introduire ce premier coefficient de pondération qui est théoriquement égal à une unité.
Toutefois, la spécificité de chaque giravion peut générer un léger écart avec la théorie. Par suite, l'invention prévoit éventuellement de réaliser des essais pour déterminer la valeur de ce premier coefficient de pondération, cette valeur étant légèrement différente de l'unité.
Dans ces conditions, la première correction de la mesure de la vitesse verticale instantanée v est égale soit au terme prédictif $C_{P1}$ soit au terme prédictif pondéré $C_{PP1}$.
Il importe de noter que cette première correction ($C_{P1}$ ou $C_{PP1}$) n'est applicable que si les deux conditions suivantes sont remplies :

- la vitesse conventionnelle VC en vol de palier est inférieure à la vitesse $V_Y$ laquelle est voisine de 65kt (noeuds),

- la vitesse conventionnelle VC est décroissante.

Dans le cas d'un giravion, on définit en effet un premier régime de vitesse s'appliquant lorsque la vitesse conventionnelle VC du giravion est supérieure à la vitesse $V_Y$ de puissance minimale. Il est caractérisé par une augmentation de la puissance avec la vitesse par rapport à l'air et correspond à des vols stabilisés.
A contrario, un deuxième régime de vitesse s'applique en dessous de cette vitesse de puissance minimale. Il est caractérisé par une instabilité de vol des giravions. Dans ce deuxième régime de vitesse, la vitesse conventionnelle est basse et la puissance augmente quand la vitesse du giravion diminue. Les mesures anémométriques sont alors de moins en moins fiables quand la vitesse d'avancement du giravion diminue. De plus, la vitesse verticale instantanée mesurée est approximative en raison du retard lié à l'inertie d'un variomètre.
Le procédé selon la présente invention peut comprendre de plus durant l'étape b2), une étape b22) au cours de laquelle on détermine une deuxième correction de la vitesse verticale instantanée v et valant :

$$C_{P2} = V_P\frac{dV_P}{dt}$$

qui par définition s'oppose à la variation d'altitude $\frac{dh}{dt}$ du giravion en raison de la relation :

$$\frac{dh}{dt} = -V_p \frac{\dot{dV_P}}{dt}$$

obtenue par dérivation de l'expression du bilan énergétique supposé constant pendant la réduction de vitesse du giravion à partir de la vitesse $V_Y$ de puissance minimale jusqu'au vol stationnaire, soit :

$$\frac{1}{2}mV_P{}^2 + mgh + \int Wn + \int W = CT$$

où m, h et g désignent respectivement la masse de l'aéronef, l'altitude de vol, et l'accélération de la pesanteur, CT étant une constante et les puissances $W_n$ et W restant constantes.

Dans ces conditions, l'accélération instantanée de l'aéronef $\frac{dV_P}{dt}$ est avantageusement obtenue à partir d'une mesure d'accélération, par exemple relative à un accéléromètre disposé suivant l'axe longitudinal du giravion, plus précis que le résultat découlant du traitement de mesures anémométriques à basse vitesse.

Dans le cadre de cette deuxième correction, il est prévu éventuellement en deuxième lieu, durant une étape b22') de pondérer le terme correctif par un deuxième coefficient pondérateur B sensiblement égal à 0,5.

Le terme correctif pondéré $C_{PP2}$ s'écrit donc :

$$C_{PP2} = B \times C_{P2}$$

Le deuxième coefficient de pondération est arbitrairement fixé à 0,5. toutefois, il pourrait être affiner par essais selon la sensibilité recherchée.

Par conséquent, la deuxième correction de la mesure de la vitesse verticale instantanée v est égale soit au terme correctif, soit au terme correctif pondéré.

Plus précisément, cette deuxième correction est destinée à compenser les éventuelles interprétations erronées des indications fournies par un variomètre et relatives à un phénomène dit d' « ascendance ».

En effet, lorsque le pilote fait cabrer le giravion, même légèrement, et voire instinctivement, sans toutefois modifier la puissance motrice instantanée (énergie) du giravion, le variomètre indique une vitesse verticale positive dans un tout premier temps.

Ainsi, à court terme, l'assiette longitudinale du fuselage augmente et le giravion tend à monter. Or, l'énergie totale du giravion est la somme de son énergie cinétique et de son énergie potentielle. Comme la puissance est maintenue constante, l'énergie potentielle augmentant, l'énergie cinétique diminue de sorte que le giravion ralentit.

Malheureusement, le pilote ne se rend pas compte de la perte de vitesse du giravion car il croit profiter du phénomène naturel d'ascendance. Le pilote ne peut donc remédier à cette perte de vitesse par une augmentation de la puissance du giravion.

De plus, ce ralentissement dans le domaine du deuxième régime de vitesse s'accompagne, comme vu ci-dessus, d'une augmentation de puissance nécessaire.

Dès lors, la vitesse verticale chute subitement de manière à devenir fortement négative, le pilote n'ayant pas augmenté la puissance nécessaire comme requis en raison de la diminution de la vitesse d'avancement. Le giravion amorce donc une descente rapide, voire dangereuse, et imprévisible de la part du pilote puisque le variomètre affichait, quelques instants auparavant, une vitesse verticale positive (vitesse ascensionnelle).

Dans la mesure où d'une part la première correction est seulement appliquée et d'autre part les première et deuxième corrections sont appliquées simultanément, la vitesse verticale corrective $v_{CORR}$ dépend toujours du terme prédictif $C_{P1}$ et prend l'une des formes suivantes :

$v_{CORR} = C_{P1}$
ou $v_{CORR} = C_{PP1}$

OU $v_{CORR} = C_{P1} + C_{P2}$
ou $v_{CORR} = C_{P1} + C_{PP2}$
OU $v_{CORR} = C_{PP1} + C_{P2}$
ou $v_{CORR} = C_{PP1} + C_{PP2}$

Par suite, la vitesse verticale prédictive $v_{AP}$, retenue à l'étape b3) et présentée au pilote, est, selon le cas, telle que :

$v_{AP} = v + C_{P1}$
ou $v_{AP} = v + C_{PP1}$
ou $v_{AP} = v + C_{P1} + C_{P2}$
OU $v_{AP} = v + C_{P1}^{+} C_{PP2}$
ou $v_{AP} = v + C_{PP1} + C_{P2}$
OU $v_{AP} = v + C_{PP1} + C_{PP2}$

Préférentiellement, la vitesse propre prédictive Vpp est déterminée par la relation :

$$V_{PP} = V_P + \frac{dV_P}{dt} \Delta t$$

avec un espace temps $\Delta t$ avantageusement égal à 10 secondes.

Cette condition conduit à écrire la vitesse propre prévisionnelle dans 10 secondes de la façon suivante :

$$V_{P10} = V_P + (10 \times \frac{dV_P}{dt})$$

A titre d'exemple, la vitesse verticale prédictive dans 10 secondes s'écrit alors comme ci-après dans le cas le plus général :

$$v_{AP} = v + A[(v+k)\frac{V_{PP} - V_P}{2V_Y - V_{PP}}] + B(V_P \frac{dV_P}{dt})$$

soit, si $\Delta t = 10$ secondes :

$$v_{AP} = v + A(v_{10} - v) + B(V_P \frac{dV_P}{dt})$$

où :

$$v_{10} = v + (v + k) \frac{V_{P10} - V_P}{2V_Y - V_{P10}})$$

$v_{10}$ étant la vitesse verticale v prédictive dans 10 secondes, sans prise en compte du terme correctif ou du terme correctif pondéré.

La détermination de la vitesse propre instantanée $V_P$, selon au moins trois variantes applicables à chacun des deux modes de réalisation de l'invention, permet notamment de pallier à la perte de sensibilité à basse vitesse d'un anémomètre.

Selon la première variante de l'invention, on mesure la vitesse propre instantanée à partir d'un instrument connu sous l'appellation «Omni Directional Air Data System», parfois dénommé « ODAS » utilisé par exemple pour des hélicoptères militaires tels que l'appareil UH60 ou encore un dispositif similaire mis en oeuvre sur l'hélicoptère « DAUPHIN™ COAST GUARD », développé par la demanderesse.

Il s'agit de deux tubes de Pitot placés sur deux bras opposés d'une antenne tournante, centrée sur l'axe de rotation du rotor principal, au dessus du plan des pales.

Un tel dispositif a une sensibilité à peu près constante et peut fournir les deux composantes de la vitesse air dans le plan de rotation du dispositif, à l'exclusion de la troisième composante.

La deuxième variante fait recours pour la mesure de la vitesse d'un aéronef, notamment d'un giravion à basse vitesse, à l'anémomètre décrit dans le document FR0607239 de la demanderesse.

Cet instrument comporte un bras tournant à vitesse constante muni de deux sondes de pression disposées à chacune de ses extrémités, chaque sonde ayant deux prises de pression symétriques par rapport au plan de rotation dudit bras, ce qui permet d'accéder aux trois composantes de la vitesse par rapport à l'air.

En conséquence, une telle anémométrie n'est plus un facteur limitant au niveau de la mesure des pressions statique et totale à basses vitesses et on obtient ainsi la vitesse propre du giravion avec une bonne précision à basse vitesse d'avancement avec ces deux dispositifs.

La troisième variante est basée sur une hypothèse selon laquelle le vent ne change ni en intensité ni en direction pendant la réduction de la vitesse du giravion à partir de la vitesse $V_Y$ de puissance minimale jusqu'au vol stationnaire.

En effet, il est aisé de déterminer la vitesse du vent, à une vitesse conventionnelle supérieure à la vitesse de puissance minimale car dans ce premier régime de vitesse et comme déjà précisé, les informations d'origine anémométrique sont fiables. On a donc accès grâce à un anémomètre à la vitesse conventionnelle VC et à la vitesse propre $V_P$ après avoir effectué la correction barométrique selon la relation :

$$V_P = \frac{VC}{\sqrt{\sigma}}$$

Par contre, aux basses vitesses ($VC < V_Y$) et avec un équipement courant, la seule mesure de vitesse sol fiable est actuellement celle fournie par un GPS (« Global Positionning System » en langue anglaise). La vitesse $V_P$ ne peut plus donc résulter de la mesure anémométrique relative à la vitesse conventionnelle VC fournie par un anémomètre.

Selon l'invention, on détermine dans ce cas la vitesse du vent $\overrightarrow{V_W}$ au moment de la réduction de vitesse en dessous de $V_Y$ en soustrayant vectoriellement la vitesse sol fournie par le GPS de la vitesse $\overrightarrow{V_P}$ résultant de la mesure anémométrique. Cette vitesse $\overrightarrow{V_W}$ est supposée rester constante pendant l'approche du giravion durant laquelle sa vitesse diminue de $V_Y$ à zéro, de sorte que la vitesse propre $\overrightarrow{V_P}$ est alors estimée égale à la somme vectorielle $\overrightarrow{V_S} + \overrightarrow{V_W}$, $\overrightarrow{V_S}$ étant la vitesse sol instantanée issue du GPS dans l'ensemble du deuxième régime. La vitesse conventionnelle VC correspondante sera ainsi égale à $V_P \sqrt{\sigma}$.

On obtient ainsi la vitesse propre $V_P$ du giravion quelle que soit sa vitesse de vol. Cependant, il est à noter que la vitesse propre $V_P$ déterminée selon cette troisième variante est essentiellement bidimensionnelle du fait que la vitesse sol fournie par le GPS est aussi bidimensionnelle.

L'invention a également pour objet un dispositif de détection et de signalisation selon la revendication 22 du domaine de vortex « instantané » relatif à un giravion d'un type donné de giravion, mettant en oeuvre le procédé présenté ci-dessus, et qui se caractérise en ce qu'il comprend :

- un premier moyen pour mesurer la vitesse verticale instantanée v d'un giravion,

- un deuxième moyen pour mesurer la vitesse propre instantanée $V_P$ d'un giravion,

- un troisième moyen constitutif d'une base de données relative à la représentation d'un domaine de vortex instantané par un diagramme dans un système d'axes lié au plan du rotor et tel que les abscisses et les ordonnées correspondent respectivement aux composantes de la vitesse de l'air, tangentielle et normale audit plan du rotor du giravion,

- un quatrième moyen relié par une première $\ell 1$, une deuxième t2 et une troisième $\ell 3$ liaisons respectivement au premier, deuxième et troisième moyens, ce quatrième moyen étant prévu pour :

  • calculer en temps réel la vitesse verticale prédictive $v_{AP}$ du giravion,

  • calculer en temps réel la vitesse propre prédictive $V_{PP}$ du giravion associée à la vitesse verticale prédictive $v_{AP}$,

  • détecter si le couple vitesse verticale prédictive et vitesse propre prédictive associée est inclus dans le domaine de vortex instantané,

  • déclencher une alarme si ledit couple vitesse verticale prédictive et vitesse propre prédictive associée est détecté dans le domaine de vortex instantané.

Dans ces conditions, un cinquième moyen relié par une liaison $\ell 4$ au quatrième moyen signale cette alarme au pilote du giravion.

Selon le mode de réalisation de l'invention, le domaine de vortex instantané est du type dynamique. Par suite, le troisième moyen comprend une pluralité de diagrammes représentatifs d'autant d'états du vortex, chaque diagramme correspondant à une assiette donnée du plan du rotor.

Dans la mesure où le dispositif selon l'invention exploite un domaine de vortex instantané du type dynamique, il est nécessaire d'implémenter ce dispositif par un sixième moyen de mesure de ladite assiette rotor, assimilée à l'assiette du giravion comme vu précédemment. Le quatrième moyen détermine alors à partir du troisième moyen, le domaine de vortex instantané associé à ladite assiette mesurée.

Le sixième moyen est relié par une liaison L1 audit quatrième moyen.

Par ailleurs, et de manière optionnelle, le dispositif comprend aussi un septième moyen, relié par une liaison L2 au quatrième moyen pour la mesure de l'accélération instantanée du giravion, pour calculer le terme correctif ou le terme correctif pondéré précédemment explicité.

Avantageusement, on note que :

- le premier moyen est un variomètre,

- le deuxième moyen est de façon avantageuse mais non exclusivement soit un anémomètre selon les deux variantes précitées, soit un GPS selon la troisième variante. Dans ce dernier cas, la vitesse propre correspond à la somme vectorielle de la vitesse fournie par le GPS et de la vitesse du vent obtenue par différence de la vitesse propre et de la vitesse donnée par le GPS quand la vitesse conventionnelle est égale à la vitesse de puissance minimale,

- le quatrième moyen est un calculateur,

- le cinquième moyen est une alarme sonore, lumineuse ou tout autre moyen équivalent tel qu'un indicateur avec une symbologie adaptée, par exemple,

- le sixième moyen est un horizon artificiel,

- le septième moyen est un accéléromètre.

Par ailleurs, il est rappelé que le troisième moyen contient en mémoire les valeurs prédéterminées de la vitesse $V_Y$ de puissance minimale et d'un coefficient caractéristique k, qui sont des constantes pour un giravion d'un type donné de giravion.

Ainsi, selon l'invention et contrairement aux préjugés existants, il devient possible de gérer les limites du domaine de vol d'un giravion, notamment d'éviter ou de retarder l'entrée en VRS (« Vortex Ring State », dénomination anglo-saxonne de l'état de vortex).

L'invention et ses avantages apparaîtront avec plus de détails dans le cadre de la description suivante qui illustre des exemples de réalisation préférés, donnés sans aucun caractère limitatif, en référence aux figures annexées qui représentent :

- la figure 1, une illustration de l'écoulement de l'air en présence d'un rotor de giravion dans un état de vortex,

- la figure 2, un schéma de présentation du dispositif selon l'invention,

- la figure 3, une illustration de la représentation d'un état de vortex par un diagramme,

- la figure 4 un schéma synoptique des étapes d'exécution du procédé selon l'invention.

Les éléments présents dans plusieurs figures distinctes sont affectés d'une seule et même référence.

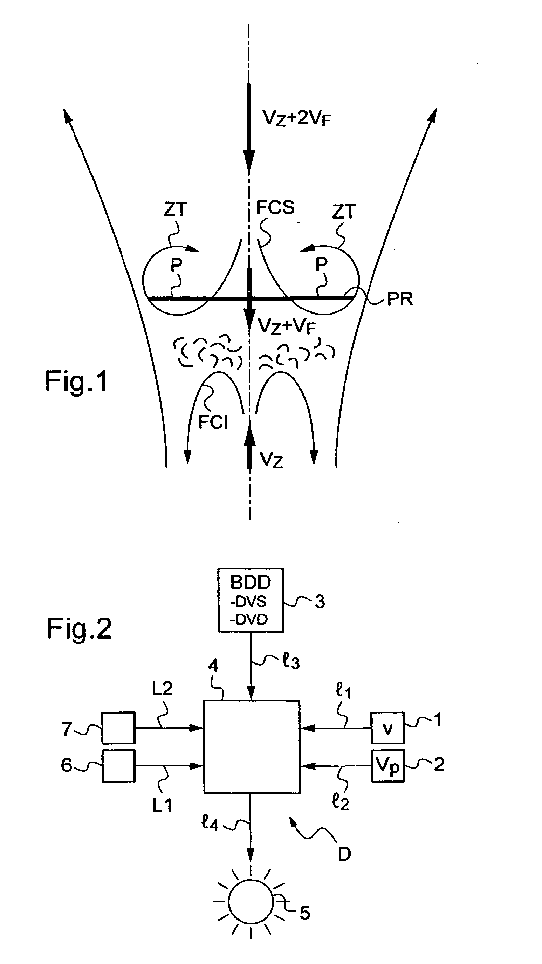

Le sens des vitesses de l'air représentées sur la figure 1 correspond à une descente lente et quasi-verticale d'un giravion. La vitesse $V_Z$ désigne la composante de la vitesse de l'écoulement de l'air, normale au plan du rotor PR et la valeur $V_F$, appelée « vitesse de Froude » par l'homme du métier, est supérieure dans cette situation à $V_Z$.

On constate qu'un sillage S se forme à la partie inférieure du rotor, ce qui oblige les filets d'air centraux supérieurs FCS à créer une zone tourbillonnaire ZT vers la périphérie des pales P.

Dans ces conditions, ce phénomène d'état de vortex manifesté en principe par des vibrations ressenties par l'équipage, prend naissance quand le giravion amorce une descente (verticale, mais aussi à forte pente de descente), le rotor descendant dans son propre souffle et perdant alors de la portance en raison de son isolement par rapport à l'écoulement d'air. Une chute brutale s'ensuit si aucune manoeuvre correctrice n'est entreprise.

Pour remédier à ce dangereux inconvénient, propre aux giravions, la demanderesse propose un procédé et un dispositif remplissant de façon inattendue des fonctions de détection et de signalisation prédictives de l'approche d'un état de vortex. Dès lors, le pilote du giravion peut prendre les mesures qui s'imposent en anticipant son action par rapport à cette approche, évitant l'entrée du giravion dans un état de vortex.

Le dispositif D selon la figure 2 et conforme à l'invention comprend à cet effet :

- un premier moyen 1 pour mesurer la vitesse verticale instantanée v d'un giravion, ce premier moyen étant avantageusement un variomètre,

- un deuxième moyen 2 pour mesurer la vitesse propre instantanée $V_P$ du giravion, ce deuxième moyen correspondant de préférence à l'une des trois variantes suivantes :

  • un anémomètre selon la première et la deuxième variantes précitées,

  • ou un GPS selon la troisième variante susmentionnée auquel cas la vitesse propre correspond à la somme vectorielle de la vitesse fournie par le GPS et de la vitesse du vent obtenue par différence de la vitesse propre et de la vitesse donnée par le GPS quand la vitesse conventionnelle VC est égale ou supérieure à la vitesse $V_Y$ de puissance minimale.
  Bien entendu, on peut envisager tout autre instrument de mesure de la vitesse propre, sans pour autant sortir du cadre de la présente invention,

  • un troisième moyen 3 constitutif d'une base de données BDD relative à la représentation d'au moins un domaine de vortex instantané par au moins un diagramme dans un système d'axes lié au plan du rotor et tel que les abscisses et les ordonnées correspondent respectivement aux composantes de la vitesse de l'air, tangentielle et normale au plan du rotor du giravion,

  • un quatrième moyen 4 constitué par un calculateur relié par une première $\ell$1, une deuxième $\ell$2 et une troisième t3 liaisons respectivement au premier, deuxième et troisième moyens, ce quatrième moyen étant prévu pour :

      ○ le calcul en temps réel de la vitesse verticale prédictive $v_{AP}$ du giravion,

      ○ le calcul en temps réel de la vitesse propre prédictive $V_{PP}$ du giravion associée à la vitesse verticale prédictive $v_{AP}$,

      ○ une détection si le couple vitesse verticale prédictive et vitesse propre prédictive associée est inclus dans un domaine de vortex instantané,

      ○ une signalisation d'une alarme si ledit couple vitesse propre prédictive $V_{PP}$ et vitesse verticale prédictive

$v_{AP}$ associée est détecté dans le domaine de vortex instantané,

○ un cinquième moyen 5 de signalisation de ladite alarme relié au quatrième moyen 4 par une liaison ℓ4, ce cinquième moyen étant une alarme sonore, lumineuse ou tout autre tel qu'un indicateur avec une symbologie adaptée, par exemple.

De façon optionnelle, le dispositif D peut aussi comporter :

- un sixième moyen 6, relatif de préférence à un horizon artificiel, relié par une liaison L1 au quatrième moyen 4, de façon à sélectionner un diagramme représentatif du domaine de vortex dynamique relatif à la mesure de l'assiette du plan du rotor, pratiquement celle du giravion, c'est-à-dire de façon à déterminer le domaine de vortex instantané correspondant à ladite assiette mesurée, si nécessaire par interpolation ou extrapolation entre différents diagrammes définis pour différentes assiettes dudit plan du rotor, ou encore en retenant le diagramme relatif à l'assiette du plan du rotor la plus proche de l'assiette mesurée,

- un septième moyen 7, relié par une liaison L2 au quatrième moyen 4, de façon à déterminer l'accélération instantanée $\dfrac{dV_P}{dt}$ du giravion pour corriger éventuellement les effets dits d'« ascendance », ce septième moyen étant de préférence un accéléromètre.

Par ailleurs, il est rappelé que le quatrième moyen 4 contient en mémoire d'une part les valeurs prédéterminées de la vitesse $V_Y$ de puissance minimale et d'un coefficient caractéristique k, qui sont des constantes pour un giravion d'un type donné de giravion et d'autre part les valeurs des constantes A et B, ajustables en fonction du besoin.

On rappelle que le dispositif comporte un mode de réalisation, correspondant à l'exploitation du troisième moyen 3 respectivement à partir d'un domaine de vortex instantané de type statique (un seul diagramme représentatif du domaine de vortex instantané relatif en principe à une assiette sensiblement nulle du plan du rotor), et de type dynamique (avec une pluralité de diagrammes, chacun relatif à une assiette du plan du rotor représentatif d'un domaine de vortex instantané).

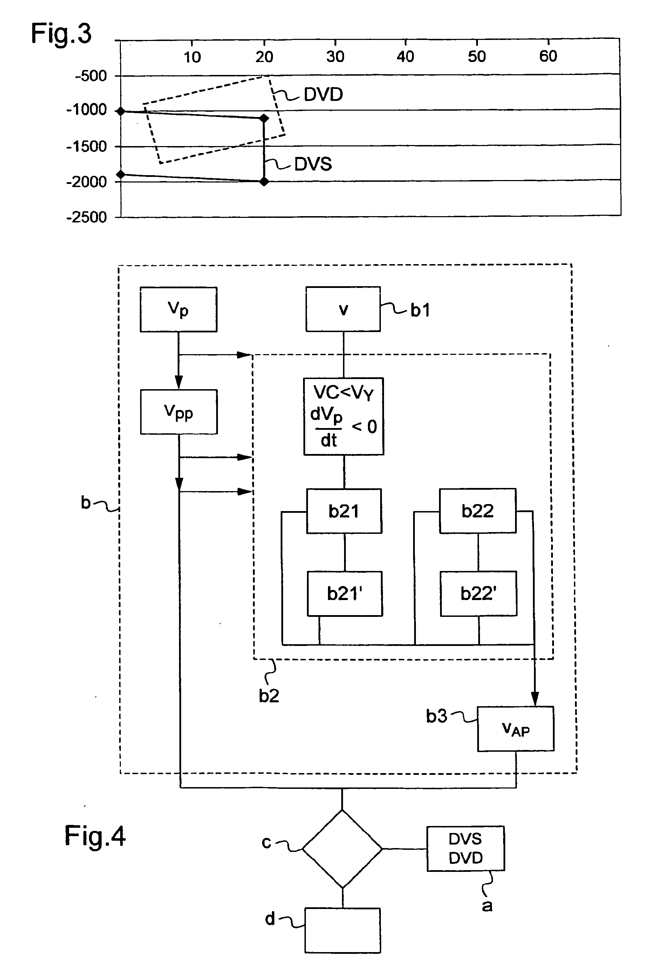

A titre illustratif, la figure 3 représente un domaine de vortex instantané du type statique sous la forme du diagramme DVS alors que le diagramme DVD correspond à un état de vortex instantané, sélectionné parmi une pluralité de diagrammes représentatifs d'un domaine de vortex du type dynamique. Les abscisses et les ordonnées désignent les composantes de la vitesse de l'écoulement de l'air respectivement dans le plan du rotor (exprimée en noeuds) et normale à ce plan (exprimée en ft/mn).

En l'espèce, les diagrammes selon la figure 3 concernent un hélicoptère Ecureuil AS 350 fabriqué par la demanderesse. Cet appareil se trouve en zone de vortex si un couple de valeurs vitesse propre et vitesse verticale associée est à l'intérieur du domaine de vortex statique DVS (assiettes du plan du rotor et du giravion sensiblement identiques). Il en est de même pour le domaine de vortex dynamique, en l'occurrence si un tel couple de valeurs est compris dans le diagramme DVD pour l'assiette associée du plan du rotor. Dans le cas présent, ce diagramme DVD correspond à une assiette du plan du rotor de l'ordre de 22 degrés ce qui montre l'évolution possible du domaine DVS vers le domaine DVD en fonction de l'évolution de l'assiette du plan du rotor.

Bien entendu, le dispositif peut exploiter comme diagramme représentatif du domaine de vortex instantané :

- soit un diagramme représentatif du domaine de vortex statique,

- soit un diagramme représentatif du domaine de vortex statique d'une part et une pluralité de diagrammes représentatifs du domaine de vortex dynamique.

Lorsque les diagrammes représentatifs d'un domaine de vortex dynamique sont utilisés, le diagramme de vortex instantané retenu pour une assiette mesurée du giravion est alors obtenu :

- soit par une interpolation ou une extrapolation effectuée à partir de la pluralité de diagrammes disponibles, chacun étant associé à une assiette du plan du rotor,

- soit en sélectionnant le diagramme relatif à une assiette du plan du rotor, la plus proche de celle mesurée.

L'utilisation d'un domaine de vortex dynamique positionne les vitesses prédictives propre et verticale par rapport aux composantes de la vitesse de l'écoulement de l'air, assimilation admise en raison du caractère prédictif précité et de la simplification en résultant.

Dans ces conditions, le dispositif 1 met en oeuvre le procédé schématisé par la figure 4.

Ainsi, le procédé de détection et de signalisation du domaine de vortex relatif à un giravion est remarquable en ce que l'on effectue successivement les étapes suivantes :

a) on fait une série de mesures préalables sur un giravion de référence du type particulier de giravion en mesurant lors de vols préliminaires une pluralité de couples de valeurs relatives aux composantes tangentielle et normale de la vitesse de l'écoulement d'air par rapport au plan du rotor, ces couples de valeurs déterminant au moins un domaine de vortex instantané représentatif d'un état de vortex par au moins un diagramme où les abscisses et les ordonnées correspondent respectivement auxdites composantes tangentielle et normale,

b) lors du vol d'un giravion dudit type particulier de giravion, on détermine en temps réel une vitesse propre prédictive $V_{PP}$ dudit giravion et une vitesse verticale prédictive $v_{AP}$ associée,

c) on définit une première condition de détection relative auxdites vitesses propre prédictive $V_{PP}$ et verticale prédictive $v_{AP}$ associée qui sont incluses dans le domaine de vortex instantané,

d) on déclenche une alarme de signalisation lorsque ladite première condition de détection est réalisée.

Comme explicité ci-dessus, le domaine de vortex instantané est représenté par un diagramme issu d'un domaine de vortex soit du type statique, soit du type dynamique, ledit diagramme étant tel que les abscisses et les ordonnées correspondent aux composantes de la vitesse de l'air respectivement tangentielle et normale au plan du rotor.

De façon avantageuse, on obtient la vitesse verticale prédictive $v_{AP}$ au cours de l'étape b) en effectuant les étapes complémentaires suivantes :

b1) on mesure la vitesse verticale instantanée v du giravion,

b2) on détermine une vitesse verticale corrective $v_{CORR}$,

b3) on additionne la vitesse verticale corrective à la vitesse verticale instantanée pour obtenir ladite vitesse verticale prédictive $v_{AP}$.

De plus, au cours de l'étape b2), durant une étape b21), on détermine une première correction de la mesure de la vitesse verticale instantanée v en fonction de la vitesse propre verticale $V_P$, la vitesse propre prédictive Vpp, la vitesse $V_Y$ de puissance minimale, la vitesse verticale instantanée v mesurée par un variomètre et une constante caractéristique k du giravion d'un type donné de giravion.

Sur cette base et en premier lieu, on détermine un terme prédictif applicable à la vitesse verticale instantanée v et valant :

$$C_{P1} = (v + k)\frac{V_{PP} - V_P}{2V_Y - V_{PP}}$$

Dans le cadre de cette première correction, il est prévu éventuellement en deuxième lieu durant une étape b21') de pondérer le terme prédictif par un premier coefficient pondérateur A déterminé par des essais relatifs à chaque type de giravion. Ce premier coefficient pondérateur est généralement proche de l'unité.

Le terme prédictif pondéré $C_{PP1}$ s'écrit donc :

$$C_{PP1} = A \times C_{P1}$$

Dans ces conditions, la première correction de la mesure de la vitesse verticale instantanée v est égale soit au terme prédictif $C_{P1}$ soit au terme prédictif pondéré $C_{PP1}$.

Il importe de noter que cette première correction ($C_{P1}$ ou $C_{PP1}$) n'est applicable que si les deux conditions suivantes sont remplies :

- la vitesse conventionnelle VC en vol de palier est inférieure à la vitesse $V_Y$ laquelle est voisine de 65kt (noeuds),

- la vitesse conventionnelle VC est décroissante.

Le procédé selon la présente invention peut comprendre de plus durant l'étape b2), une étape b22) au cours de laquelle on détermine une deuxième correction de la vitesse verticale instantanée v et valant :

$$C_{P2} = V_P \frac{dV_P}{dt}$$

qui par définition s'oppose à la variation d'altitude $\dfrac{dh}{dt}$ du giravion dans les conditions expliquées par ailleurs.

Dans le cadre de cette deuxième correction, il est prévu éventuellement en deuxième lieu, durant une étape b22') de pondérer le terme correctif par un deuxième coefficient pondérateur B sensiblement égal à 0,5.

Le terme correctif pondéré $C_{PP2}$ s'écrit donc :

$$C_{PP2} = B \times C_{P2}$$

Par conséquent, la deuxième correction de la mesure de la vitesse verticale instantanée v est égale soit au terme correctif, soit au terme correctif pondéré.

Dans la mesure où d'une part la première correction est seulement appliquée et d'autre part les première et deuxième corrections sont appliquées simultanément, la vitesse verticale corrective $v_{CORR}$ prend l'une des formes suivantes :

$v_{CORR} = C_{P1}$
ou $v_{CORR} = C_{PP1}$
ou $v_{CORR} = C_{P1} + C_{P2}$
OU $v_{CORR} = C_{P1} + C_{PP2}$
OU $v_{CORR} = C_{PP1} + C_{P2}$
ou $v_{CORR} = C_{PP1} + C_{PP2}$

Par suite, la vitesse verticale prédictive $v_{AP}$, retenue à l'étape b3) est, selon le cas, telle que :

$v_{AP} = v + C_{P1}$
ou $v_{AP} = v + C_{PP1}$
ou $v_{AP} = v + C_{P1} + C_{P2}$
ou $v_{AP} = v + C_{P1} + C_{PP2}$
OU $v_{AP} = v + C_{PP1} + C_{P2}$
ou $v_{AP} = v + C_{PP1} + C_{PP2}$

Par ailleurs, la vitesse propre prédictive Vpp est déterminée par la relation :

$$V_{PP} = V_P + \frac{dV_P}{dt} \Delta t$$

avec un espace temps $\Delta t$ avantageusement égal à 10 secondes.

Cette condition conduit à écrire la vitesse propre prévisionnelle dans 10 secondes de la façon suivante :

$$V_{P10} = V_P + (10 \times \frac{dV_P}{dt})$$

A titre d'exemple, la vitesse verticale prédictive dans 10 secondes s'écrit alors comme ci-après dans le cas le plus général :

$$v_{AP} = v + A[(v+k)\frac{V_{PP} - V_P}{2V_Y - V_{PP}}] + B(V_P \frac{dV_P}{dt})$$

soit, si $\Delta t$ = 10 secondes :

$$v_{AP} = v + A (v_{10} - v) + B(V_P \frac{dV_P}{dt})$$

où :

$$v_{10} = v + (v + k) \frac{V_{P10} - V_P}{2V_Y - V_{P10}})$$

$v_{10}$ étant la vitesse verticale v prédictive dans 10 secondes, sans prise en compte du terme correctif ou du terme correctif pondéré.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Dans la mesure où il est envisagé d'améliorer la précision des vitesses prédictives, une expérimentation spécifique est effectuée en vol avec le giravion concerné d'un type particulier de giravion, pour déterminer avec précision les premier et deuxième coefficient pondérateurs A et B au lieu de les fixer à des valeurs arbitraires respectives de 1 et 0,5 par exemple.

En pratique, et selon un protocole préféré, ledit giravion concerné se déplaçant sensiblement à la vitesse $V_Y$ de puissance minimale et éventuellement en cours d'évolutions à vitesse verticale instantanée non nulle, un essai consiste à réduire, à partir d'une vitesse propre instantanée $V_p$ inférieure ou égale à $V_Y$ à un premier temps t, cette vitesse d'avancement de giravion tout en maintenant si possible constante la puissance motrice. De plus, on répète l'essai en imposant au giravion, à chaque essai, un niveau à peu près constant de décélération, étant entendu que d'une part ledit niveau de décélération peut être modifié d'un essai à l'autre et d'autre part que plusieurs essais peuvent être réalisés à un même niveau de décélération, ou encore à partir de différentes vitesses propres instantanées $V_p$ au premier temps t.

Chaque niveau de décélération est obtenu par un déplacement longitudinal du manche cyclique vers l'arrière du giravion par le pilote. Dans ces conditions, il en résulte une inclinaison du plateau cyclique donc du plan de rotation du rotor dans le sens à cabrer vers l'avant du giravion.

Cette action a pour effet d'imposer une décélération au giravion concerné.

Par ailleurs, chaque essai est poursuivi pendant une durée d'au moins dix secondes c'est-à-dire jusqu'à un deuxième temps (t + 10 secondes), cette durée de 10 secondes étant préférentiellement retenue pour la prédiction de la vitesse propre prévisionnelle $V_{pp}$ écrite alors sous la forme $V_{p10}$.

Durant chaque essai, on enregistre par conséquent, pendant 10 secondes au moins, les mesures des quantités suivantes :

- la vitesse verticale instantanée v, au début de l'essai au premier temps t,

- la vitesse verticale v au deuxième temps (t + 10 secondes), égale à la vitesse verticale $v_{AP}$ à un deuxième temps (t + 10 secondes),

- la vitesse propre instantanée $V_P$ au premier temps t,

- la décélération $\dfrac{dV_P}{dt}$

sachant que les quantités $v_y$ et k sont connues par ailleurs, comme des caractéristiques dudit type de giravion.

Par suite, on calcule les termes $C_{p1}$ et $C_{p2}$ pour chaque essai de telle sorte que l'on établit pour chaque essai une équation de la forme :

$$(A \times C_{p1}) + (B \times C_{P2}) = v_{AP} - v$$

ou : $v_{AP}$ est égale à la vitesse verticale v mesurée au deuxième temps (t + 10 secondes), et
v est égale à la vitesse verticale v mesurée au premier temps (t).

Il y a donc autant d'équations que d'essais, le système d'équations en résultant étant résolu par des méthodes numériques classiques qu'il n'est pas nécessaire de décrire présentement.

La résolution de ce système d'équations permet ainsi d'obtenir des premier et deuxième coefficients pondérateurs A et B.

Ces coefficients pondérateurs peuvent être exploités indifféremment à l'aide des relations suivantes décrites précédemment selon le cas d'expèce envisagé :

$v_{AP} = v + C_{PP1}$ (coefficient A seul utilisé)
$v_{AP} = v + C_{Pp2}$ (coefficient B seul utilisé)
$v_{AP} = v + C_{P1} + C_{PP2}$ (coefficient B seul utilisé)
$v_{AP} = v + C_{PP1} + C_{P2}$ (coefficient A seul utilisé)
$v_{AP} = v + C_{PP1} + C_{PP2}$ (coefficients A et B utilisés)

## Revendications

1.  Procédé de détection et de signalisation de l'approche d'un domaine de vortex par un giravion d'un type particulier de giravion,
où l'on effectue successivement les étapes suivantes :

a) on fait une série de mesures préalables sur un giravion de référence du type particulier de giravion en mesurant lors de vols préliminaires une pluralité de couples de valeurs relatives aux composantes tangentielle et normale de la vitesse de l'écoulement d'air par rapport au plan du rotor, ces couples de valeurs déterminant au moins un domaine de vortex instantané représentatif d'un état de vortex par au moins un diagramme où les abscisses et les ordonnées correspondent respectivement auxdites composantes tangentielle et normale,
b) lors du vol d'un giravion dudit type particulier de giravion, on détermine en temps réel une vitesse propre prédictive ($V_{PP}$) dudit giravion et une vitesse verticale prédictive ($v_{AP}$) associée,
c) on définit une première condition de détection relative auxdites vitesses propre prédictive ($V_{PP}$) et verticale prédictive ($v_{AP}$) associées qui sont incluses dans le domaine de vortex instantané,
d) on déclenche une alarme de signalisation lorsque ladite première condition de détection est réalisée,

**caractérisé en ce que**: l'on détermine la vitesse propre prédictive (VPP) par la relation suivante où t et $\Delta t$ désignent respectivement le temps et un espace de temps: $V_{PP} = V_P + \dfrac{dV_P}{dt} \Delta t,$

la vitesse verticale prédictive ($V_{AP}$) étant calculée en effectuant les étapes complémentaires suivantes :

b1) on mesure la vitesse verticale instantanée (v) du giravion,

b2) on détermine une vitesse verticale corrective ($v_{CORR}$), dépendant d'un terme prédictif

b3) on additionne la vitesse verticale corrective à la vitesse verticale instantanée pour obtenir ladite vitesse verticale prédictive ($v_{AP}$),

ledit terme prédictif applicable à la vitesse verticale instantanée (v) étant déterminé au cours d'une étape b21 et valant :

$$C_{P_1} = (v + k)\frac{V_{PP} - V_P}{2V_Y - V_{PP}}$$

avec :

Vp = vitesse propre instantanée du giravion, d'un type donné de giravion,

VY = vitesse prédéterminée de puissance minimale du giravion, d'un type donné de giravion,

k = coefficient caractéristique prédéterminé du giravion, d'un type donné de giravion.

si les deux conditions suivantes sont remplies :

- la vitesse conventionnelle (VC) en vol de palier est inférieure à la vitesse ($V_Y$) de puissance minimale,
- la vitesse conventionnelle (VC) est décroissante.

2.  Procédé selon la revendication 1,
    **caractérisé en ce que** le domaine de vortex instantané est de type statique, représenté par un seul diagramme comportant en abscisses et en ordonnées, les composantes de la vitesse de l'air respectivement tangentielle et normale au plan du rotor, ledit diagramme correspondant de plus à une seule assiette, sensiblement nulle dudit plan du rotor.

3.  Procédé selon la revendication 1,
    **caractérisé en ce que** le domaine de vortex instantané est de type soit statique, soit de type dynamique représenté par un diagramme sélectionné parmi une pluralité de diagrammes relatifs à une pluralité d'assiettes du plan du rotor, y compris l'assiette sensiblement nulle, de telle sorte que ledit diagramme sélectionné correspond sensiblement à l'assiette mesurée dudit plan du rotor et comporte en abscisses et en ordonnées les composantes de la vitesse de l'air respectivement tangentielle et normale au plan du rotor.

4.  Procédé selon la revendication 3,
    **caractérisé en ce que** durant une étape supplémentaire b21'), on détermine un terme prédictif pondéré ($C_{PP_1}$), A étant un premier coefficient pondérateur, tel que :

$$C_{PP_1} = A \times C_{P_1}$$

5.  Procédé selon la revendication 4, **caractérisé en ce que** le premier coefficient pondérateur (A) est proche de 1.

6.  Procédé selon l'une quelconque des revendications précédentes,
    **caractérisé en ce que** la vitesse verticale corrective ($v_{CORR}$) est égale au terme prédictif ($C_{P_1}$) de sorte que la vitesse verticale prédictive est telle que :

$$v_{AP} = v + C_{P_1}$$

7.  Procédé selon l'une quelconque des revendications 4 à 5,
    **caractérisé en ce que** la vitesse verticale corrective ($v_{CORR}$) est égale au terme prédictif pondéré ($C_{PP_1}$) de sorte que la vitesse verticale prédictive ($v_{AP}$) est telle que :

$$v_{AP} = v + C_{PP1}$$

**8.** Procédé selon l'une quelconque des revendications précédentes,
**caractérisé en ce que** au cours de l'étape b2), durant une étape b22), on détermine un terme correctif ($C_{P2}$) tel que :

$$C_{P2} = V_P \frac{dV_P}{dt}$$

($V_P$) désignant la vitesse instantanée du giravion et $\left( \dfrac{dV_P}{dt} \right)$ son accélération instantanée, t étant le temps.

**9.** Procédé selon la revendication 8,
**caractérisé en ce que**, ayant déterminé au cours d'une étape b21) un terme prédictif ($C_{P1}$), la vitesse verticale corrective ($v_{CORR}$) est égale à l'addition du terme correctif ($C_{P2}$) et du terme prédictif ($C_{P1}$) de sorte que la vitesse ascensionnelle ($v_{AP}$) est telle que :

$$v_{AP} = C_{P1} + C_{P2}$$

**10.** Procédé selon la revendication 8,
**caractérisé en ce que**, ayant déterminé au cours d'une étape supplémentaire b21') un terme prédictif pondéré ($C_{PP1}$), la vitesse verticale corrective ($v_{CORR}$) est égale à l'addition du terme correctif ($C_{P2}$) et du terme prédictif pondéré ($C_{PP1}$) de sorte que la vitesse verticale prédictive ($v_{AP}$) est telle que :

$$v_{AP} = v + C_{PP1} + C_{P2}$$

**11.** Procédé selon la revendication 8,
**caractérisé en ce que** durant une étape supplémentaire b22'), on détermine un terme correctif pondéré ($C_{PP2}$), B étant un deuxième coefficient pondérateur, tel que :

$$C_{PP2} = B \times C_{P2}$$

**12.** Procédé selon la revendication 11,
**caractérisé en ce que** le deuxième coefficient pondérateur (B) est sensiblement égal à 0,5.

**13.** Procédé selon l'une quelconque des revendications 11 à 12,
**caractérisé en ce que**, ayant déterminé au cours d'une étape b21) un terme prédictif ($C_{P1}$), la vitesse verticale corrective ($v_{CORR}$) est égale à l'addition du terme prédictif ($C_{P1}$) et du terme correctif pondéré ($C_{PP2}$) de sorte que la vitesse ascensionnelle prédictive ($v_{AP}$) est telle que :

$$v_{AP} = v + C_{P1} + C_{PP2}$$

**14.** Procédé selon l'une quelconque des revendications 11 à 12,
**caractérisé en ce que**, ayant déterminé au cours d'une étape supplémentaire b21') un terme prédictif pondéré $(C_{PP1})$, la vitesse verticale corrective $(v_{CORR})$ est égale à l'addition du terme prédictif pondéré $(C_{PP1})$ et du terme correctif pondéré $(C_{PP2})$ de sorte que la vitesse verticale prédictive $(v_{AP})$ est telle que :

$$V_{AP} = v + C_{PP1} + C_{PP2}$$

**15.** Procédé selon l'une quelconque des revendications précédentes,
**caractérisé en ce que** l'espace de temps $(\Delta t)$ est sensiblement de dix secondes.

**16.** Procédé selon l'une quelconque des revendications précédentes,
**caractérisé en ce que** l'on mesure la vitesse verticale instantanée (v) à l'aide d'un variomètre.

**17.** Procédé selon l'une quelconque des revendications précédentes,
**caractérisé en ce que** l'on mesure l'accélération $\left( \dfrac{dV_P}{dt} \right)$ à l'aide d'un accéléromètre disposé selon l'axe longitudinal du giravion.

**18.** Procédé selon l'une quelconque des revendications précédentes,
**caractérisé en ce que** l'on mesure la vitesse propre instantanée $(V_P)$ à l'aide d'un « Omni Directionnal Air Data System ».

**19.** Procédé selon l'une quelconque des revendications précédentes,
**caractérisé en ce que** l'on mesure la vitesse propre instantanée $(V_P)$ à l'aide d'un anémomètre comportant un bras tournant à vitesse constante, muni de deux sondes de pression disposées chacune à une des extrémités dudit bras, chaque sonde ayant deux prises de pression symétriques par rapport au plan de rotation du bras.

**20.** Procédé selon l'une quelconque des revendications précédentes
**caractérisé en ce que** si la vitesse conventionnelle (VC) du giravion est inférieure à la vitesse $(V_Y)$ de puissance minimale, on calcule la vitesse propre $(V_P)$ dudit giravion en faisant la somme vectorielle de la vitesse sol $\left( \overrightarrow{V_s} \right)$ fournie par un GPS et de la vitesse du vent $\left( \overrightarrow{V_w} \right)$ obtenue par différence entre la vitesse propre donnée par un anémomètre et la vitesse donnée par un GPS quand la vitesse conventionnelle (VC) est égale à la vitesse $(V_Y)$ de puissance minimale.

**21.** Procédé selon l'une quelconque des revendications précédentes,
**caractérisé en ce que** l'on mesure l'assiette du rotor à partir d'un horizon artificiel.

**22.** Dispositif (D) de détection et de signalisation de l'approche d'un domaine de vortex par un giravion, mettant en oeuvre le procédé selon l'une quelconque des revendications précédentes, comprenant :

- un premier moyen (1) pour mesurer la vitesse verticale instantanée v du giravion,
- un deuxième moyen (2) pour mesurer la vitesse propre instantanée $V_P$ du giravion,
- un troisième moyen (3) constitutif d'une base de données (BDD) relative à la représentation d'au moins un domaine de vortex instantané par un diagramme dans un système d'axes lié au plan du rotor et tel que les abscisses et les ordonnées correspondent respectivement aux composantes de la vitesse de l'air, tangentielle et normale audit plan du rotor du giravion,
- un quatrième moyen (4) relié par une première ($\ell$1), une deuxième ($\ell$2) et une troisième (t3) liaisons respectivement au premier, deuxième et troisième moyens, ce quatrième moyen étant destiné à détecter l'approche d'un domaine de vortex par le giravion,
- un cinquième moyen (5) de signalisation de l'approche d'un domaine de vortex par le giravion, relié au quatrième moyen (4) par une liaison ($\ell$4),

**caractérisé en ce que** le quatrième moyen (4) étant un calculateur notamment prévu pour :

- le calcul en temps réel de la vitesse verticale prédictive ($v_{AP}$) du giravion,
- le calcul en temps réel de la vitesse propre prédictive (VPP) du giravion associée à la vitesse verticale prédictive ($v_{AP}$),
- une détection si le couple vitesse verticale prédictive et vitesse propre prédictive associée est inclus dans le domaine de vortex instantané,
- une signalisation d'une alarme si ledit couple vitesse propre prédictive ($v_{PP}$) et vitesse verticale prédictive ($v_{AP}$) associée est détecté dans le domaine de vortex instantané

**23.** Dispositif (D) selon la revendication 22,
**caractérisé en ce qu'**il comprend en plus un sixième moyen (6), relié par une liaison (L1) au quatrième moyen (4) de façon à sélectionner un diagramme représentatif du domaine instantané de vortex dynamique relatif à la mesure de l'assiette du plan du rotor par ledit sixième moyen.

**24.** Dispositif selon l'une quelconque des revendications 22 à 23,
**caractérisé en ce qu'**il comprend également un septième moyen (7), relié par une liaison (L2) au quatrième moyen (4), de façon à déterminer l'accélération instantanée $\left( \dfrac{dV_P}{dt} \right)$ du giravion.

**25.** Dispositif selon l'une quelconque des revendications 22 à 23,
**caractérisé en ce que** le premier moyen (1) est un variomètre.

**26.** Dispositif selon l'une quelconque des revendications 22 à 25,
**caractérisé en ce que** le deuxième moyen (2) est un « Omni Directionnal Air Data System ».

**27.** Dispositif selon l'une quelconque des revendications 22 à 27,
**caractérisé en ce que** le deuxième moyen (2) est un anémomètre comportant un bras tournant à vitesse constante, muni de deux sondes de pression disposées chacune à une des extrémités dudit bras, chaque sonde ayant deux prises de pression symétriques par rapport au plan de rotation du bras.

**28.** Dispositif selon l'une quelconque des revendications 22 à 25,
**caractérisé en ce que** le deuxième moyen (2) est un GPS de telle sorte que si la vitesse conventionnelle (VC) du giravion est inférieure à la vitesse ($V_y$) de puissance minimale, la vitesse propre (VP) dudit giravion correspond à la somme vectorielle de la vitesse sol $\left( \overrightarrow{V_s} \right)$ fournie par un GPS et de la vitesse du vent $\left( \overrightarrow{V_w} \right)$ obtenue quant à elle par différence entre la vitesse donnée par un anémomètre et la vitesse donnée par un GPS quand la vitesse conventionnelle (VC) est égale à la vitesse ($V_y$) de puissance minimale.

**29.** Dispositif selon l'une quelconque des revendications 22 à 28,
**caractérisé en ce que** le cinquième moyen (5) est une alarme sonore, lumineuse ou encore un indicateur doté d'une symbologie appropriée.

**30.** Dispositif selon l'une quelconque des revendications 22 à 29,
**caractérisé en ce que** le sixième moyen (6) est un horizon artificiel.

**31.** Dispositif selon l'une quelconque des revendications 22 à 30,
**caractérisé en ce que** le septième moyen (7) est un accéléromètre disposé selon un axe sensiblement horizontal du giravion.

**Claims**

**1.** Method for detecting and signalling the approach of a vortex domain by a rotorcraft of a particular type of rotorcraft, in which the following steps are performed in succession:

a) making a series of prior measurements on a reference rotorcraft of the particular type of rotorcraft by measuring during preliminary flights a plurality of pairs of values relating to the tangential and normal components of the speed of the flow of air relative to the plane of the rotor, these pairs of values determining at least one instantaneous vortex domain representative of a vortex state by means of at least one diagram in which the abscissae and the ordinates correspond respectively to said tangential and normal components,

b) during flight of a rotorcraft of said particular type of rotorcraft, determining in real time a predictive airspeed ($V_{PP}$) of said rotorcraft and an associated predictive vertical speed ($V_{AP}$),

c) defining a first detection condition relating to said associated predictive airspeed ($V_{PP}$) and predictive vertical speed ($v_{AP}$) which are included in the instantaneous vortex domain,

d) triggering a signalling alarm when said first detection condition is satisfied,

**characterised in that**: the predictive airspeed (VPP) is determined by means of the following relationship in which t and At designate respectively time and a time interval: $V_{PP} = V_P + \dfrac{dV_P}{dt} \, \Delta t,$

the predictive vertical speed ($V_{AP}$) being calculated by performing the following additional steps:

b1) measuring the instantaneous vertical speed (v) of the rotorcraft,

b2) determining a corrective vertical speed ($v_{CORR}$) depending on a predictive term,

b3) adding the corrective vertical speed to the instantaneous vertical speed to obtain said predictive vertical speed ($v_{AP}$),

said predictive term applicable to the instantaneous vertical speed (v) being determined in the course of a step b21 and given by:

$$C_{P1} = (v + k) \frac{V_{PP} - V_P}{2V_Y - V_{PP}}$$

with:

$V_P$ = the instantaneous airspeed of the rotorcraft, of a given type of rotorcraft,

VY = the predetermined minimum-power speed of the rotorcraft, of a given type of rotorcraft, k = a predetermined characteristic coefficient of the rotorcraft, of a given type of rotorcraft,

providing the following two conditions are satisfied:

- the calibrated airspeed (VC) in level flight is less than the minimum-power speed ($V_Y$),
- the calibrated airspeed (VC) is decreasing.

**2.** Method according to Claim 1,
**characterised in that** the instantaneous vortex domain is of the static type, represented by a single diagram comprising as abscissae and ordinates the components of the speed of the air that are respectively tangential and normal to the plane of the rotor, said diagram further corresponding to a single attitude of said plane of the rotor, which attitude is substantially zero.

**3.** Method according to Claim 1,
**characterised in that** the instantaneous vortex domain is either of the static type or of the dynamic type, represented by a diagram selected from a plurality of diagrams relating to a plurality of attitudes of the plane of the rotor, including the attitude that is substantially zero, such that said selected diagram corresponds substantially to the measured attitude of said plane of the rotor and comprises as its abscissae and ordinates the components of the speed of the air that are respectively tangential and normal to the plane of the rotor.

**4.** Method according to Claim 3,
**characterised in that** during an additional step b21'), a weighted predictive term ($C_{PP1}$) is determined, where A is a first weighting coefficient, such that:

$$C_{PP1} = A \times C_{P1}$$

5. Method according to Claim 4,
   **characterised in that** the first weighting coefficient (A) is close to 1.

6. Method according to any one of the preceding claims,
   **characterised in that** the corrective vertical speed ($v_{CORR}$) is equal to the predictive term ($C_{P1}$) so that the predictive vertical speed is such that:

$$v_{AP} = v + C_{P1}$$

7. Method according to any one of Claims 4 to 5,
   **characterised in that** the corrective vertical speed ($v_{CORR}$) is equal to the weighted predictive term ($C_{PP1}$) so that the predictive vertical speed ($V_{AP}$) is such that:

$$v_{AP} = v + C_{PP1}$$

8. Method according to any one of the preceding claims, **characterised in that**, in the course of step b2), during a step b22), a corrective term ($C_{P2}$) is determined such that:

$$C_{P2} = V_P \frac{dV_P}{dt}$$

where ($V_P$) designates the instantaneous speed of the rotorcraft and $\left(\dfrac{dV_P}{dt}\right)$ its instantaneous acceleration, t being time.

9. Method according to Claim 8,
   **characterised in that**, after a predictive term ($C_{P1}$) has been determined in the course of a step b21), the corrective vertical speed ($v_{CORR}$) is equal to adding the corrective term ($C_{P2}$) and the predictive term ($C_{P1}$) so that the climbing speed ($v_{AP}$) is such that:

$$V_{AP} = C_{P1} + C_{P2}$$

10. Method according to Claim 8,
    **characterised in that**, after a weighted predictive term ($C_{PP1}$) has been determined in the course of an additional step b21'), the corrective vertical speed ($v_{CORR}$) is equal to adding the corrective term ($C_{P2}$) and the weighted predictive term ($C_{PP1}$) so that the predictive vertical speed ($v_{AP}$) is such that:

$$v_{AP} = v + C_{PP1} + C_{P2}$$

11. Method according to Claim 8, **characterised in that** during an additional step b22'), a weighted corrective term ($C_{PP2}$) is determined, where B is a second weighting coefficient, such that:

$$C_{PP2} = B \times C_{P2}$$

12. Method according to Claim 11,
    **characterised in that** the second weighting coefficient (B) is substantially equal to 0.5.

13. Method according to any one of Claims 11 to 12,

**characterised in that**, after a predictive term ($C_{P1}$) has been determined in the course of a step b21), the corrective vertical speed ($v_{CORR}$) is equal to adding the predictive term ($C_{P1}$) and the weighted corrective term ($C_{PP2}$) so that the predictive climbing speed ($v_{AP}$) is such that:

$$v_{AP} = v + C_{P1} + C_{PP2}$$

14. Method according to any one of Claims 11 to 12,
    **characterised in that**, after a weighted predictive term ($C_{PP1}$) has been determined in the course of an additional step b21'), the corrective vertical speed ($v_{CORR}$) is equal to adding the weighted predictive term ($C_{PP1}$) and the weighted corrective term ($C_{PP2}$) so that the predictive vertical speed ($v_{AP}$) is such that:

$$V_{AP} = v + C_{PP1} + C_{PP2}$$

15. Method according to any one of the preceding claims,
    **characterised in that** the time interval ($\Delta t$) is substantially ten seconds.

16. Method according to any one of the preceding claims,
    **characterised in that** the instantaneous vertical speed (v) is measured using a variometer.

17. Method according to any one of the preceding claims,

    **characterised in that** the acceleration ($\frac{dV_P}{dt}$) is measured using an accelerometer arranged on the longitudinal axis of the rotorcraft.

18. Method according to any one of the preceding claims,
    **characterised in that** the instantaneous airspeed ($V_P$) is measured using an "omnidirectional air data system".

19. Method according to any one of the preceding claims,
    **characterised in that** the instantaneous airspeed ($V_P$) is measured using an airspeed indicator comprising an arm rotating at constant speed, provided with two pressure probes, each disposed at one of the ends of said arm, each probe having two pressure intakes symmetrical relative to the plane of rotation of the arm.

20. Method according to any one of the preceding claims, **characterised in that** if the calibrated airspeed (VC) of the rotorcraft is less than the minimum-power speed ($V_Y$), the airspeed ($V_P$) of said rotorcraft is calculated by obtaining the vector sum of the ground speed ($\vec{V_s}$) provided by a GPS and the wind speed ($\vec{V_w}$) obtained by taking the difference between the airspeed given by an airspeed indicator and the speed given by a GPS when the calibrated airspeed (VC) is equal to the minimum-power speed ($V_Y$).

21. Method according to any one of the preceding claims,
    **characterised in that** the attitude of the rotor is measured from an artificial horizon.

22. Device (D) for detecting and signalling the approach of a vortex domain by a rotorcraft, the device implementing the method according to any one of the preceding claims, comprising:

    - a first means (1) for measuring the instantaneous vertical speed v of the rotorcraft,
    - a second means (2) for measuring the instantaneous airspeed $V_P$ of the rotorcraft,
    - a third means (3) constituting a database (BDD) relating to the representation of at least one instantaneous vortex domain by means of a diagram in a system of axes associated with the plane of the rotor and such that the abscissae and ordinates correspond respectively to the components of the airspeed that are tangential and normal to said plane of the rotor of the rotorcraft,
    - a fourth means (4) connected by first ($\ell1$), second ($\ell2$), and third ($\ell3$) connections, respectively to the first, second, and third means, the fourth means being intended to detect the approach of a vortex domain by the rotorcraft,
    - a fifth means (5) for signalling the approach of a vortex domain by the rotorcraft, the fifth means being connected to the fourth means (4) by a connection (ℓ4),

**characterised in that** the fourth means (4) being a computer provided in particular for:

- calculating in real time the predictive vertical speed ($v_{AP}$) of the rotorcraft,
- calculating in real time the predictive airspeed (VPP) of the rotorcraft associated with the predictive vertical speed ($v_{AP}$),
- detecting whether the pair of predictive vertical speed and associated predictive airspeed is included in the instantaneous vortex domain,
- signalling an alarm if said pair of predictive airspeed ($v_{PP}$) and associated predictive vertical speed ($v_{AP}$) is detected within the instantaneous vortex domain.

23. Device (D) according to Claim 22,
**characterised in that** it further comprises a sixth means (6) connected via a connection (L1) to the fourth means (4) so as to select a diagram representative of the dynamic instantaneous vortex domain relating to the attitude of the plane of the rotor as measured by said sixth means.

24. Device according to any one of Claims 22 to 23,
**characterised in that** it also comprises a seventh means (7) connected via a connection (L2) to the fourth means (4) so as to determine the instantaneous acceleration ($\frac{dV_P}{dt}$) of the rotorcraft.

25. Device according to any one of Claims 22 to 23,
**characterised in that** the first means (1) is a variometer.

26. Device according to any one of Claims 22 to 25,
**characterised in that** the second means (2) is an "omnidirectional air data system".

27. Device according to any one of Claims 22 to 27,
**characterised in that** the second means (2) is an airspeed indicator comprising an arm rotating at constant speed, provided with two pressure probes, each disposed at one of the ends of said arm, each probe having two pressure intakes symmetrical relative to the plane of rotation of the arm.

28. Device according to any one of Claims 22 to 25,
**characterised in that** the second means (2) is a GPS such that if the calibrated airspeed (VC) of the rotorcraft is less than the minimum-power speed ($V_y$), the airspeed (VP) of said rotorcraft corresponds to the vector sum of the ground speed ($\vec{V}_s$) provided by a GPS and the wind speed ($\vec{V}_w$) obtained for its part by taking the difference between the speed given by an airspeed indicator and the speed given by a GPS when the calibrated airspeed (VC) is equal to the minimum-power speed ($V_y$).

29. Device according to any one of Claims 22 to 28,
**characterised in that** the fifth means (5) is an audible alarm, a luminous alarm, or an indicator provided with appropriate symbology.

30. Device according to any one of Claims 22 to 29,
**characterised in that** the sixth means (6) is an artificial horizon.

31. Device according to any one of Claims 22 to 30,
**characterised in that** the seventh means (7) is an accelerometer disposed on a substantially horizontal axis of the rotorcraft.

**Patentansprüche**

1. Verfahren zur Erkennung und Signalisierung der Annäherung eines Drehflüglers eines bestimmten Typs an einen Wirbelbereich, bei dem aufeinanderfolgend folgende Schritte ausgeführt werden:

a) man führt eine Reihe von vorausgehenden Messungen an einem Referenzdrehflügler des bestimmten Typs aus, indem man während vorbereitender Flüge eine Mehrzahl von Wertepaaren misst, die sich auf die tangentiale Komponente und die normale Komponente der Strömungsgeschwindigkeit der Luft im Verhältnis zu der Rotorebene beziehen, wobei die Wertepaare mindestens einen momentanen Wirbelbereich bestimmen, der repräsentativ für einen Wirbelzustand ist, durch mindestens ein Diagramm, in dem die Abszisse und die Ordinate jeweils den tangentialen und normalen Komponenten entsprechen,

b) man bestimmt in Echtzeit während des Fluges eines Drehflüglers eines bestimmten Typs eine prädiktive Eigengeschwindigkeit ($V_{PP}$) des Drehflüglers und eine zugehörige prädiktive vertikale Geschwindigkeit ($V_{AP}$),

c) man definiert eine erste Erkennungsbedingung bezüglich der prädiktiven Eigengeschwindigkeit ($V_{pp}$) und der zugehörigen prädiktiven vertikalen Geschwindigkeit ($V_{AP}$), die in dem momentanen Wirbelbereich enthalten sind,

d) man löst eine Alarmanzeige aus, wenn die erste Erkennungsbedingung erfüllt ist,

**dadurch gekennzeichnet, dass** man die prädiktive Eigengeschwindigkeit ($V_{PP}$) durch die folgende Beziehung bestimmt, worin t und $\Delta$t jeweils die Zeit und einen Zeitabschnitt bezeichnen:

$$V_{PP} = V_P + \frac{dV_P}{dt}\,\Delta t\,,$$

wobei die prädiktive vertikale Geschwindigkeit ($V_{AP}$) berechnet wird, indem man folgende zusätzliche Schritte ausführt:

b1) man misst die momentane vertikale Geschwindigkeit (v) des Drehflüglers,

b2) man bestimmt eine vertikale Korrekturgeschwindigkeit ($V_{CORR}$), die von einem Prädiktionsausdruck abhängt,

b3) man addiert die vertikale Korrekturgeschwindigkeit zu der momentanen Vertikalgeschwindigkeit, um die prädiktive Vertikalgeschwindigkeit ($V_{AP}$) zu erhalten,

wobei der auf die momentane Vertikalgeschwindigkeit (v) anwendbare prädiktive Ausdruck während eines Schrittes b21 bestimmt wird und beträgt:

$$C_{P1} = (v + k)\,\frac{V_{PP} - V_P}{2V_Y - V_{PP}}$$

mit:

$V_P$ = momentane Eigengeschwindigkeit des Drehflüglers eines vorgegebenen Typs,
VY = vorbestimmte Geschwindigkeit bei minimaler Leistung des Drehflüglers eines vorgegebenen Typs,
k = vorbestimmter charakteristischer Koeffizient des Drehflüglers von einem vorgegebenen Typ,
wenn die beiden folgenden Bedingungen erfüllt sind:

- die Eigengeschwindigkeit (VC) beim Horizontalflug kleiner ist als die Geschwindigkeit ($V_Y$) bei minimaler Leistung,
- die Eigengeschwindigkeit (VC) abnehmend ist.

**2.** Verfahren nach Anspruch 1,
**dadurch gekennzeichnet, dass** der momentane Wirbelbereich statischer Art ist, dargestellt durch ein einziges Diagramm mit den Komponenten der tangentialen bzw. normalen Luftgeschwindigkeit in der Rotorebene auf der Abszisse bzw. der Ordinate, wobei das Diagramm außerdem einer einzigen im Wesentlichen Null betragenden Gleichgewichtslage der Rotorebene entspricht.

**3.** Verfahren nach Anspruch 1,
**dadurch gekennzeichnet, dass** der momentane Wirbelbereich entweder statischer Art oder dynamischer Art ist, dargestellt durch ein Diagramm, welches aus einer Mehrzahl von Diagrammen bezüglich einer Mehrzahl von Gleichgewichtspositionen der Rotorebene ausgewählt ist, einschließlich der Gleichgewichts-Nulllage, derart, dass das ausgewählte Diagramm im Wesentlichen einer gemessenen Gleichgewichtslage der Rotorebene entspricht und auf der Abszisse und der Ordinate die bezüglich der Rotorebene tangentiale bzw. normale Luftgeschwindigkeit aufweist.

**4.** Verfahren nach Anspruch 3,
**dadurch gekennzeichnet, dass** während eines zusätzlichen Schritts (b21') ein gewichteter prädiktiver Ausdruck ($C_{PP1}$) bestimmt wird, wobei A ein erster Wichtungskoeffizient ist, derart, dass

$$C_{PP1} = A \times C_{P1}.$$

**5.** Verfahren nach Anspruch 4,
**dadurch gekennzeichnet, dass** der erste Wichtungskoeffizient (A) nahe 1 liegt.

**6.** Verfahren nach einem der vorstehenden Ansprüche,
**dadurch gekennzeichnet, dass** die vertikale Korrekturgeschwindigkeit ($V_{CORR}$) gleich dem prädiktiven Ausdruck ($C_{P1}$) ist, derart, dass die prädiktive Vertikalgeschwindigkeit beträgt:

$$V_{AP} = v + C_{P1}.$$

**7.** Verfahren nach einem der Ansprüche 4 bis 5,
**dadurch gekennzeichnet, dass** die vertikale Korrekturgeschwindigkeit ($V_{CORR}$) gleich dem gewichteten prädiktiven Ausdruck ($C_{PP1}$) ist, derart, dass die prädiktive Vertikalgeschwindigkeit ($V_{AP}$) beträgt:

$$V_{AP} = v + C_{PP1}.$$

**8.** Verfahren nach einem der vorstehenden Ansprüche,
**dadurch gekennzeichnet, dass** im Laufe des Schrittes b2) während eines Schrittes b22) ein Korrekturausdruck ($C_{P2}$) bestimmt wird, derart:

$$C_{P2} = V_P \frac{dV_P}{dt},$$

wobei ($V_P$) die Momentangeschwindigkeit des Drehflüglers bezeichnet und $\left(\frac{dV_P}{dt}\right)$ seine momentane Beschleunigung, wobei t die Zeit bezeichnet.

**9.** Verfahren nach Anspruch 8,
**dadurch gekennzeichnet, dass**, nachdem im Laufe eines Schrittes b21) ein prädiktiver Ausdruck ($C_{P1}$) bestimmt wurde, die vertikale Korrekturgeschwindigkeit ($V_{CORR}$) gleich einer Summe des Korrekturausdrucks ($C_{P2}$) und eines prädiktiven Ausdrucks ($C_{P1}$) ist, derart, dass die Aufstiegsgeschwindigkeit ($V_{AP}$) beträgt:

$$V_{AP} = v + C_{P1} + C_{P2}.$$

**10.** Verfahren nach Anspruch 8,
**dadurch gekennzeichnet, dass**, nachdem im Laufe eines zusätzlichen Schrittes b21') ein gewichteter prädiktiver Ausdruck ($C_{PP1}$) bestimmt wurde, die vertikale Korrekturgeschwindigkeit ($V_{CORR}$) gleich einer Summe aus dem Korrekturausdruck ($C_{P2}$) und dem gewichteten prädiktiven Ausdruck ($C_{PP1}$) ist, derart, dass die voraussichtliche Vertikalgeschwindigkeit ($V_{AP}$) beträgt:

$$V_{AP} = v + C_{PP1} + C_{P2}.$$

**11.** Verfahren nach Anspruch 8,

**dadurch gekennzeichnet, dass**, während eines zusätzlichen Schrittes b22') ein gewichteter Korrekturausdruck ($C_{PP2}$) bestimmt wird, wobei B ein zweiter Wichtungskoeffizient ist, derart, dass

$$C_{PP2} = B \times C_{P2}.$$

**12.** Verfahren nach Anspruch 11,
   **dadurch gekennzeichnet, dass** der zweite Wichtungskoeffizient (B) etwa 0,5 beträgt.

**13.** Verfahren nach einem der Ansprüche 11 oder 12,
   **dadurch gekennzeichnet, dass**, nachdem im Laufe eines Schrittes b21) ein prädiktiver Ausdruck ($C_{P1}$) bestimmt wurde, die vertikale Korrekturgeschwindigkeit ($V_{CORR}$) gleich einer Summe aus dem prädiktiven Ausdruck ($C_{P1}$) und dem gewichteten Korrekturausdruck ($C_{PP2}$) ist, derart, dass die prädiktive Aufstiegsgeschwindigkeit ($V_{AP}$) beträgt:

$$V_{AP} = v + C_{P1} + C_{PP2}.$$

**14.** Verfahren nach einem der Ansprüche 11 bis 12,
   **dadurch gekennzeichnet, dass**, nachdem im Laufe eines zusätzlichen Schrittes b21') ein prädiktiver gewichteter Ausdruck ($C_{PP1}$) bestimmt wurde, die vertikale Korrekturgeschwindigkeit ($v_{CORR}$) gleich einer Summe aus dem gewichteten prädiktiven Ausdruck ($C_{PP1}$) und dem gewichteten Korrekturausdruck ($C_{PP2}$) ist, derart, dass die prädiktive Vertikalgeschwindigkeit ($V_{AP}$) beträgt:

$$V_{AP} = v + C_{PP1} + C_{PP2}.$$

**15.** Verfahren nach einem der vorstehenden Ansprüche,
   **dadurch gekennzeichnet, dass** der Zeitraum ($\Delta$t) etwa 10 Sekunden beträgt.

**16.** Verfahren nach einem der vorstehenden Ansprüche,
   **dadurch gekennzeichnet, dass** die momentane vertikale Geschwindigkeit (v) mit Hilfe eines Variometers gemessen wird.

**17.** Verfahren nach einem der vorstehenden Ansprüche,
   **dadurch gekennzeichnet, dass** man die Beschleunigung $\dfrac{dV_P}{dt}$ mit Hilfe eines entlang der Längsachse des Drehflüglers angeordneten Beschleunigungsmessers misst.

**18.** Verfahren nach einem der vorstehenden Ansprüche,
   **dadurch gekennzeichnet, dass** man die momentane Eigengeschwindigkeit ($V_P$) mit Hilfe eines "Omni Directionnal Air Data System" misst.

**19.** Verfahren nach einem der vorstehenden Ansprüche,
   **dadurch gekennzeichnet, dass** man die momentane Eigengeschwindigkeit ($V_P$) mit Hilfe eines Anemometers misst, welches einen sich mit konstanter Geschwindigkeit drehenden Arm aufweist, der mit zwei Drucksonden versehen ist, die jeweils an einem Ende des Arms angeordnet sind, wobei jede Sonde zwei bezüglich der Rotationsebene des Arms symmetrische Druckfühler aufweist.

**20.** Verfahren nach einem der vorstehenden Ansprüche,
   **dadurch gekennzeichnet, dass**, wenn die berichtigte Geschwindigkeit (VC) des Drehflüglers kleiner ist als die Geschwindigkeit ($V_Y$) bei minimaler Leistung, man die Eigengeschwindigkeit ($V_P$) des Drehflüglers berechnet, indem man die Vektorsumme der Geschwindigkeit gegenüber dem Boden ($\overline{V}_s$), die durch ein Navigationssystem (GPS) geliefert wird, und der Windgeschwindigkeit ($\overline{V}_w$) erhalten durch die Differenz aus der mit einem Anemometer gemessenen Eigengeschwindigkeit und der durch ein GPS gegebenen Geschwindigkeit bildet, wenn die berichtigte Geschwindigkeit (VC) gleich der Geschwindigkeit ($V_Y$) bei minimaler Leistung ist.

**21.** Verfahren nach einem der vorstehenden Ansprüche,
**dadurch gekennzeichnet, dass** man die Gleichgewichtsstellung des Rotors ausgehend von einem künstlichen Horizont misst.

**22.** Vorrichtung (D) zur Erkennung und Signalisierung der Annäherung eines Drehflüglers an einen Wirbelbereich zur Durchführung des Verfahrens nach einem der vorstehenden Ansprüche, mit

- einem ersten Mittel (1) zum Messen der momentanen Vertikalgeschwindigkeit v des Drehflüglers,
- einem zweiten Mittel (2) zum Messen der momentanen Eigengeschwindigkeit $V_P$ des Drehflüglers,
- einem dritten Mittel (3) bestehend aus einer Datenbank (BDD) bezüglich der Darstellung mindestens eines momentanen Wirbelbereichs durch ein Diagramm in einem Achsensystem, welches mit der Rotorebene verbunden ist, derart, dass die Abszisse und die Ordinate jeweils den bezüglich der Rotorebene des Drehflüglers tangentialen und normalen Komponenten der Luftgeschwindigkeit entsprechen,
- einem vierten Mittel (4), das durch eine erste ($\ell$1), eine zweite ($\ell$2) und eine dritte ($\ell$3) Verbindung jeweils mit dem ersten, dem zweiten und dem dritten Mittel verbunden sind, wobei das vierte Mittel dazu bestimmt ist, die Annäherung des Drehflüglers an einen Wirbelbereich zu erfassen,
- einem fünften Mittel (5) zur Signalisierung der Annäherung des Drehflüglers an einen Wirbelbereich, welches über eine Verbindung ($\ell$4) mit dem vierten Mittel (4) verbunden ist,

**dadurch gekennzeichnet, dass**
das vierte Mittel (4) ein Rechner ist, der insbesondere vorgesehen ist für:

- die Berechnung in Echtzeit der prädiktiven vertikalen Geschwindigkeit ($V_{AP}$) des Drehflüglers,
- die Berechnung in Echtzeit der prädiktiven Eigengeschwindigkeit (VPP) des Drehflüglers in Verbindung mit der prädiktiven Vertikalgeschwindigkeit ($V_{AP}$),
- eine Erfassung, ob das Paar prädiktive Vertikalgeschwindigkeit und zugehörige prädiktive Eigengeschwindigkeit in dem momentanen Wirbelbereich enthalten ist,
- das Auslösen eines Alarmsignals, wenn das Paar prädiktive Eigengeschwindigkeit ($V_{PP}$) und zugehörige prädiktive Vertikalgeschwindigkeit ($V_{AP}$) in dem momentanen Wirbelbereich enthalten ist.

**23.** Vorrichtung (D) nach Anspruch 22,
**dadurch gekennzeichnet, dass** sie außerdem ein sechstes Mittel (6) aufweist, welches über eine Verbindung (L1) mit dem vierten Mittel (4) verbunden ist, um ein repräsentatives Diagramm des momentanen Bereichs eines dynamischen Wirbels in Bezug auf die Messung der Gleichgewichtslage der Rotorebene durch das sechste Mittel auszuwählen.

**24.** Vorrichtung nach einem der Ansprüche 22 bis 23,
**dadurch gekennzeichnet, dass** sie ebenfalls ein siebtes Mittel (7) aufweist, welches über eine Verbindung (L2) mit dem vierten Mittel (4) verbunden ist, um die momentane Beschleunigung $\dfrac{dV_P}{dt}$ des Drehflüglers zu bestimmen.

**25.** Vorrichtung nach einem der Ansprüche 22 bis 23, **dadurch gekennzeichnet, dass** das erste Mittel (1) ein Variometer ist.

**26.** Vorrichtung nach einem der Ansprüche 22 bis 25,
**dadurch gekennzeichnet, dass** das zweite Mittel (2) ein "Omni Directionnal Air Data System" ist.

**27.** Vorrichtung nach einem der Ansprüche 22 bis 27,
**dadurch gekennzeichnet, dass** das zweite Mittel (2) ein Anemometer ist mit einem sich mit konstanter Geschwindigkeit drehenden Arm, der mit zwei Drucksonden versehen ist, die jeweils an einem der Enden des Arms angeordnet sind, wobei jede Sonde zwei bezüglich der Rotationsebene des Arms symmetrische Druckaufnehmer aufweist.

**28.** Vorrichtung nach einem der Ansprüche 22 bis 25,
**dadurch gekennzeichnet, dass** das zweite Mittel (2) ein GPS ist, derart, dass, wenn die berichtigte Geschwindigkeit (VC) des Drehflüglers kleiner ist als die Geschwindigkeit ($V_y$) bei minimaler Leistung, die Eigengeschwindigkeit (VP) des Drehflüglers der Vektorsumme aus der Geschwindigkeit gegenüber dem Boden ($\overline{V}_s$), die durch ein GPS geliefert wird, und der Windgeschwindigkeit ($\overline{V}_w$) erhalten durch die Differenz zwischen der durch ein Anemometer gegebenen Geschwindigkeit und der durch ein GPS gegebenen Geschwindigkeit entspricht, wenn die berichtigte Geschwindigkeit (VC) gleich der Geschwindigkeit ($V_y$) bei minimaler Leistung ist.

29. Vorrichtung nach einem der Ansprüche 22 bis 28,
**dadurch gekennzeichnet, dass** das fünfte Mittel (5) ein akustischer Alarm ist oder ein leuchtender Alarm oder eine Anzeige, die mit einer geeigneten Symbolik versehen ist.

30. Vorrichtung nach einem der Ansprüche 22 bis 29,
**dadurch gekennzeichnet, dass** das sechste Mittel (6) ein künstlicher Horizont ist.

31. Vorrichtung nach einem der Ansprüche 22 bis 30,
**dadurch gekennzeichnet, dass** das siebte Mittel (7) ein Beschleunigungsmesser ist, der entlang einer im Wesentlichen horizontalen Achse des Drehflüglers angeordnet ist.

$V_Z + 2V_F$

ZT          FCS          ZT

P                          P

PR

$V_Z + V_F$

FCI

$V_Z$

Fig.1

Fig.2

BDD
-DVS
-DVD          3

$\ell_3$

4

L2          $\ell_1$

7          →          ←          v          1

6          →          ←          $V_p$          2

L1          $\ell_2$

$\ell_4$          D

5

# Fig.3

# Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6880782 B
- FR 0607239